# EUROPÄISCHE PATENTSCHRIFT

(11) **EP 0 866 100 B1**
(45) Veröffentlichungstag und Bekanntmachung des Hinweises auf die Patenterteilung: **24.10.2001**
(21) Anmeldenummer: 98810199.4
(22) Anmeldetag: 10.03.1998
(51) Int. Cl.: C09B 62/465, C09B 62/04, C09B 62/018, C09B 67/26

(54) **Reaktivfarbstoffe, ihre Herstellung und Verwendung**
Reactive dyes, their preparation and use thereof
Colorants réactifs, leur préparation et leur utilisation

(30) Priorität: 18.03.1997 CH 65397
(43) Veröffentlichungstag der Anmeldung: 23.09.1998
(73) Patentinhaber: Ciba Specialty Chemicals Holding Inc., 4057 Basel (CH)
(72) Erfinder: Tzikas, Athanassios, 4133 Pratteln (CH); Klier, Herbert, 79588 Efringen-Kirchen (DE)

(56) Entgegenhaltungen:
- EP-A- 0 179 019
- EP-A- 0 352 222

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

In der EP-A-0 179 019 werden faserreaktive Formazanfarbstoffe offenbart, die Halogentriazin und einen weiteren amidgruppenhaltigen Reaktivrest enthalten.

Es hat sich gezeigt, dass mit den weiter unten definierten neuen reaktiven Farbstoffen die gestellte Aufgabe weitgehend gelöst wird.

Gegenstand der vorliegenden Erfindung sind Reaktivfarbstoffe der Formel 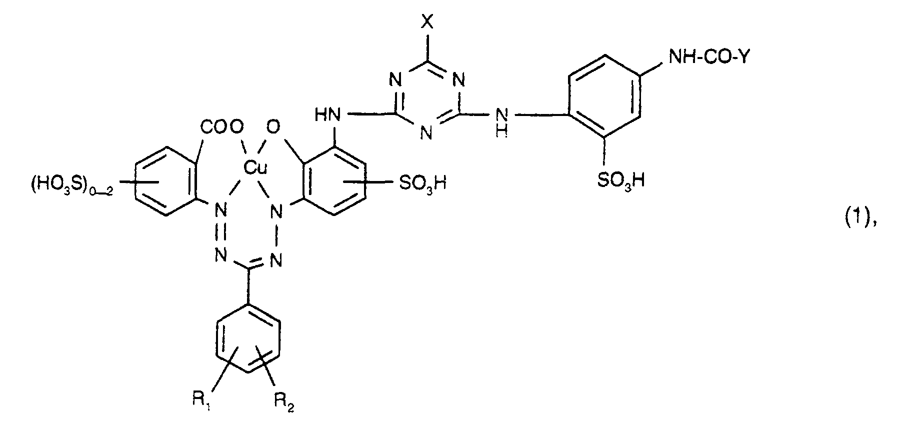 worin
R₁ und R₂ unabhängig voneinander Wasserstoff, Sulfo, C₁-C₄-Alkyl, C₁-C₄-Alkoxy oder Halogen sind,
X Fluor oder Chlor ist und
Y eine Gruppe -CHT-CH₂T oder -CT=CH₂ und T Brom oder Chlor bedeutet.

Als C₁-C₄-Alkylreste kommen für R₁ und R₂ z.B. Methyl, Aethyl, Propyl, Isopropyl, Butyl, sek.-Butyl, tert.-Butyl oder Isobutyl, insbesondere Methyl oder Aethyl, in Betracht.

Als C₁-C₄-Alkoxy kommen für R₁ und R₂ z.B. Methoxy, Äthoxy, Propoxy, lsopropoxy, Butoxy oder lsobutoxy, insbesondere Methoxy, in Betracht.

Als Halogen kommen für R₁ und R₂ Fluor, Chlor oder Brom, insbesondere Chlor, in Betracht.

R₁ und R₂ sind bevorzugt unabhängig voneinander Wasserstoff, C₁-C₄-Alkyl, C₁-C₄-Alkoxy oder Halogen, insbesondere Wasserstoff.
X ist bevorzugt Chlor.
Y ist vorzugsweise eine Gruppe -CHT-CH₂T.
Für T ist die Bedeutung als Brom bevorzugt.

In den Reaktivfarbstoffen der Formel (1) steht der Rest -(SO₃H)_{O}-₂ für 0 bis 2 Sulfogruppen, insbesondere für 0 oder eine Sulfogruppe und vorzugsweise für eine Sulfogruppe.

Bevorzugt sind Reaktivfarbstoffe der Formel (1), worin Y eine Gruppe -CHT-CH₂T und T Brom ist.

Besonders bevorzugt sind Reaktivfarbstoffe der Formel (1), worin R₁ und R₂ Wasserstoff sind, X Chlor, Y eine Gruppe -CHT-CH₂T und T Brom ist.

Ganz besonders bevorzugt sind Reaktivfarbstoffe der Formel 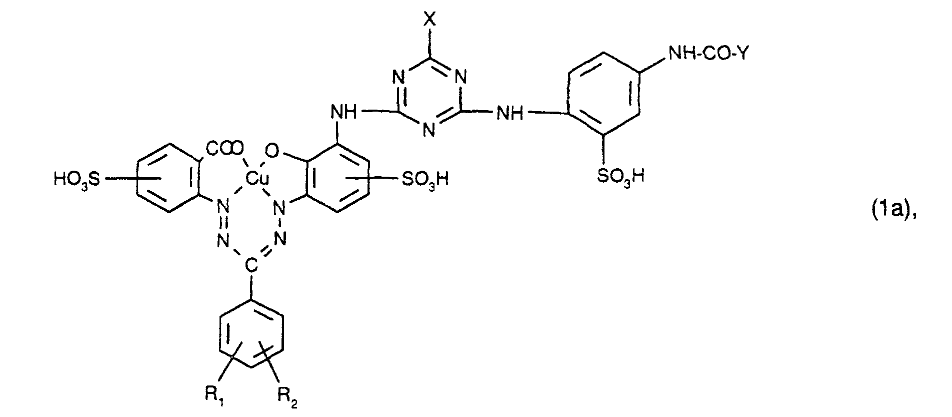 wobei für R₁, R₂, X und Y die oben angegebenen Bedeutungen und Bevorzugungen gelten.

Ganz besonders wichtig sind Reaktivfarbstoffe der Formel 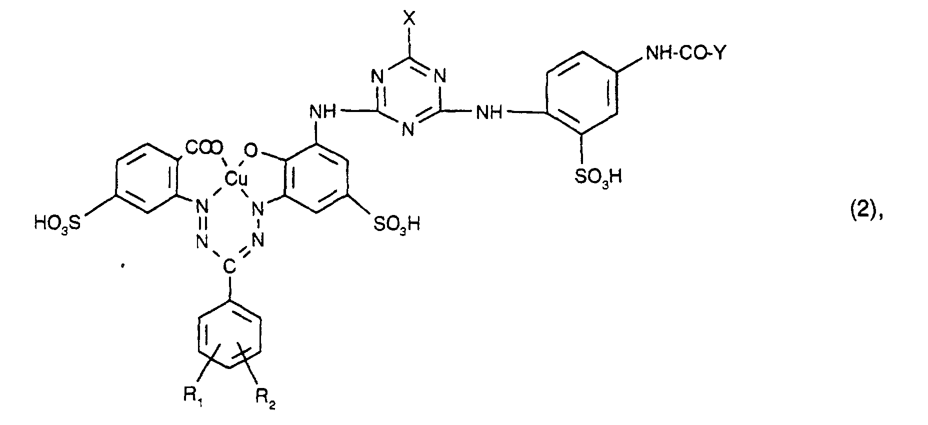 wobei für R₁, R₂, X und Y die oben angegebenen Bedeutungen und Bevorzugungen gelten.

Von besonderem Interesse sind Reaktivfarbstoffe der Formel (2), worin R₁ und R₂ Wasserstoff sind, X Chlor, Y eine Gruppe -CHT-CH₂T und T Brom ist.

Die erfindungsgemässen Reaktivfarbstoffe enthalten Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze sowie das Salz des Mono-, Di- oder Triäthanolamins genannt.

Gegenstand der vorliegenden Erfindung ist ferner ein Verfahren zur Herstellung von Reaktivfarbstoffen der Formel (1), welches dadurch gekennzeichnet ist, dass man eine Verbindung der Formel

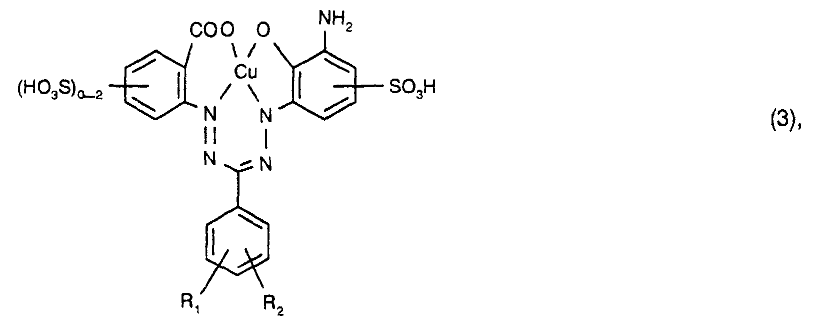

Cyanurchlorid oder Cyanurfluorid und ein Diamin der Formel 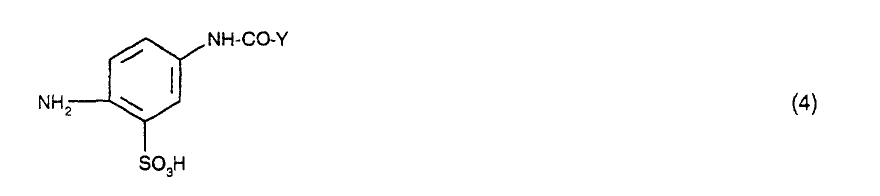 in beliebiger Reihenfolge miteinander umsetzt, wobei R₁, R₂, X und Y die oben unter Formel (1) angegebenen Bedeutungen haben.

Die einzelnen oben angegebenen Verfahrensschritte können in unterschiedlicher Reihenfolge, gegebenenfalls teilweise auch gleichzeitig, ausgeführt werden, so dass verschiedene Verfahrensvarianten möglich sind. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine Verfahrensvariante besteht darin, dass man eine Verbindung der Formel (4) mit Cyanurchlorid oder Cyanurfluorid kondensiert und das erhaltene Produkt mit einer Verbindung der Formel (3) umsetzt.

Die einzelnen Kondensationsreaktionen erfolgen z.B. gemäss an sich bekannter Verfahren, in der Regel in wässriger Lösung, bei einer Temperatur von beispielsweise 0 bis 30°C und einem pH-Wert von z.B. 3 bis 7.

Die Verbindungen der Formeln (3) und (4) sind bekannt oder können in Analogie zu bekannten Verbindungen hergestellt werden.

Die erfindungsgemässen Farbstoffe sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen, insbesondere baumwollhaltigen Fasermaterialien.

Es können die üblichen Färbe- bzw. Druckverfahren verwendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Für das Verfahren können die Mengen, in denen die Reaktivfarbstoffe in den Färbebädern verwendet werden, je nach der gewünschten Farbtiefe schwanken, im allgemeinen haben sich Mengen von 0,01 bis 10 Gewichtsprozent, insbesondere 0,01 bis 6 Gewichtsprozent, bezogen auf das Färbegut, als vorteilhaft erwiesen.

Bevorzugt für das Verfahren ist das Färben, insbesondere das Färben nach dem Ausziehverfahren.

Gemäss dem Ausziehverfahren erfolgt das Färben in der Regel in wässrigem Medium, bei einem Fiottenverhältnis von beispielsweise 1:2 bis 1:60, insbesondere einem Flottenverhältnis von 1:5 bis 1:20, und einer Temperatur von 20 bis 105°C, insbesondere 30 bis 90°C, und vorzugsweise 40 bis 80°C.

In Betracht kommt ferner das Foulard-Färbeverfahren, wonach die Ware in der Regel mit wässrigen, gegebenenfalls salzhaltigen Farbsiofflösungen imprägniert wird. Die Flottenaufnahme beträgt hierbei z.B. 20 bis 150%, insbesondere 40 bis 120% und vorzugsweise 50 bis 100%, bezogen auf das Gewicht des zu färbenden Fasermaterials. Gegebenenfalls enthält die Flotte bereits Fixieralkali, oder das Fasermaterial wird nach der Imprägnierung mit Fixieralkali behandelt. Als Alkali kommen z.B. Natriumcarbonat, Natriumbicarbonat, Natriumhydroxid, Dinatriumphosphat, Trinatriumphosphat, Borax, wässriges Ammoniak, Natriumtrichloracetat, Natriumformiat oder eine Mischung aus Wasserglas und einer wässrigen Natriumcarbonatlösung in Betracht. Bevorzugt sind hierbei Alkalihydroxid und/oder Alkalicarbonat, insbesondere Natriumhydroxid und/oder Natriumcarbonat.
Die Fixierung kann beispielsweise durch Wärmeeinwirkung, wie durch Dämpfen des imprägnierten Fasermaterials bei einer Temperatur von z.B. 100 bis 120°C, vorzugsweise im Sattdampf, erfolgen. Gemäss dem sogenannten Kaltverweilverfahren wird der Farbstoff zusammen mit dem Alkali auf dem Foulard aufgebracht und danach durch mehrstündiges Lagern, z.B. 3 bis 40 Stunden, bei Raumtemperatur fixiert. Nach dem Fixieren werden die Färbungen oder Drucke gegebenenfalls unter Zusatz eines dispergierend wirkenden Mittels gründlich gespült.

Die erhaltenen Färbungen und Drucke zeichnen sich durch ein gutes Aufbauvermögen sowie gute Egalität aus. Die Fixiergrade sind hoch und die nicht fixierten Anteile können leicht ausgewaschen werden, wobei die Differenz zwischen Ausziehgrad und Fixiergrad klein, d.h. der Seifverlust gering ist. Die gemäss dem Verfahren erhaltenen Färbungen und Drucke besitzen eine hohe Farbstärke und eine hohe Faser-Farbstoff-Bindungsstabilität, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Gegenstand der vorliegenden Erfindung sind ferner konzentrierte, wässrige Formulierungen, welche dadurch gekennzeichnet sind, dass sie 5 bis 50 Gew.-% mindestens eines Reaktivfarbstoffs der oben angegebenen Formel (1) enthalten. Für die Reaktivfarbstoffe der Formel (1) gelten hierbei die oben angegebenen Bedeutungen und Bevorzugungen.

Bevorzugt enthalten die erfindungsgemässen wässrigen Formulierungen 5 bis 40 Gew.-%, insbesondere 10 bis 40 Gew.-% und vorzugsweise 10 bis 30 Gew.-% mindestens eines Reaktivfarbstoffs der Formel (1).

Die Formulierungen sind vorzugsweise auf einen pH-Wert von 3 bis 8, insbesondere 3 bis 7 und vorzugsweise 4 bis 7 gestellt. Die Einstellung des pH-Wertes erfolgt mit einem Puffer, wie z.B. durch Zusatz eines Polyphosphats oder eines Hydrogen/Dihydrogenphosphat-Puffers. Als weitere Puffer seien Natrium- oder Kaliumacetat, Natrium- oder Kaliumoxalat und Natriumborat sowie deren Mischungen genannt.

Ferner können die Formulierungen noch eine die Wasserlöslichkeit des Farbstoffs verbessernde Komponente, wie z.B. e-Caprolactam oder N-Methylpyrrolidon, enthalten. Diese Komponenten werden in der Regel in einer Menge von 0,1 bis 30 Gew-%, bezogen auf das Gesamtgewicht der Formulierung, verwendet.

Weiterhin können die Formulierungen eigenschaftsverbessernde Hilfsmittel, wie z.B. Tenside, schaumdämpfende Hilfsmittel, Frostschutzmittel oder das Pilz- und/oder Bakterienwachstum verhindernde Mittel, enthalten. Diese Hilfsmittel sind in der Regel in geringen Mengen, wie z.B. je ca. 1 bis 10 g/l, enthalten.

Die erfindungsgemässen Formulierungen sind über einen längeren Zeitraum lagerstabil, dünnflüssig und können insbesondere in den oben angegebenen Verfahren zum Färben verwendet werden.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

a) Es wird eine Mischung von 50 Teilen Wasser, 200 Teilen Eis, 16,2 Teilen Cyanurchlorid und 0,15 Teilen Dinatriumhydrogenphosphat vorgelegt. Hierzu wird unter Rühren eine Suspension bestehend aus 34,4 Teilen 4-(2,3-Dibrompropionamido)-anilin-2-sulfonsäure und 100 Teilen Wasser portionsweise zugegeben, wobei der pH durch Zugabe wässriger Natriumhydroxidlösung (30%-ig) bei einem Wert von ca. 4 und die Temperatur bei 0 bis 2°C gehalten wird. Anschliessend wird noch ca. 3 Stunden bei einem pH-Wert von ca. 4 und einer Temperatur von 2 bis 8°C nachgerührt.
b) Es werden 53,6 Teile der Verbindung der Formel 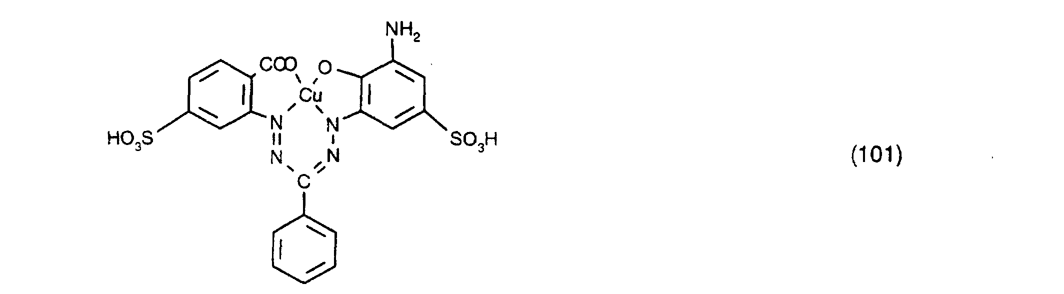 in 500 Teile Wasser suspendiert, der pH wird mit wässriger Natriumhydroxidlösung (30%-ig) auf einen Wert von 6 gestellt und es wird noch ca. 30 Minuten bei diesem pH-Wert nachgerührt. Zu der so erhaltenen Mischung wird die gemäss den Angaben unter a) erhaltene Mischung innerhalb von ca. 60 Minuten zulaufen gelassen, wobei der pH mit wässeriger Natriumhydroxidlösung (30%-ig) bei einem Wert von 6 und die Temperatur bei 20 bis 25°C gehalten wird. Anschliessend wird weitere 60 Minuten bei einem pH-Wert von 6 und einer Temperatur von 25°C nachgerührt. Man befreit die Lösung dialytisch von Salz und gefriertrocknet das erhaltene Produkt. Man erhält einen Farbstoff, der in Form der freien Säure der Formel 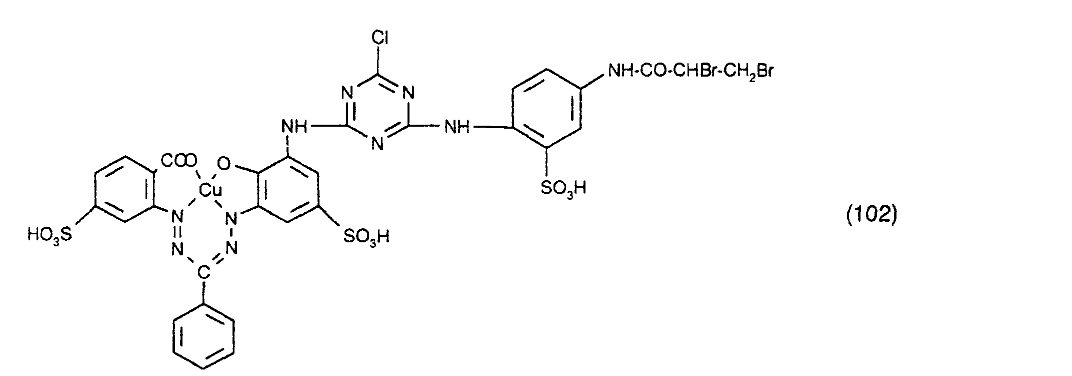 entspricht. Der erhaltene Farbstoff färbt Baumwolle in blauen Farbtönen.

### Beispiel 2:

Behandelt man den gemäss Beispiel 1 erhältlichen Farbstoff ca. 15 Minuten in einer mittels Natriumhydroxid auf einen pH-Wert von 11 gestellten wässrigen Lösung, neutralisiert die Lösung und trennt anschliessend den Farbstoff wie in Beispiel 1 angegeben ab, so erhält man den in Form der freien Säure angegebenen Farbstoff der Formel

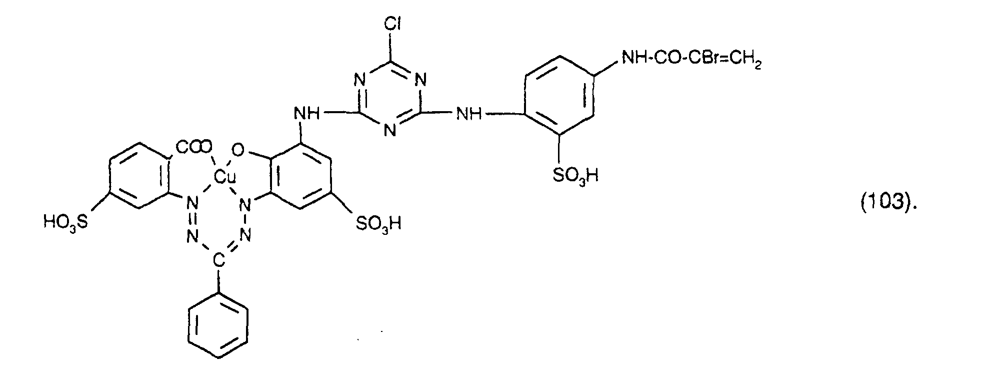

Der erhaltene Farbstoff färbt Baumwolle in blauen Farbtönen.

### Beispiele 3 bis 5:

In analoger Weise zu den Angaben in Beispiel 1 können die Farbstoffe der Formeln 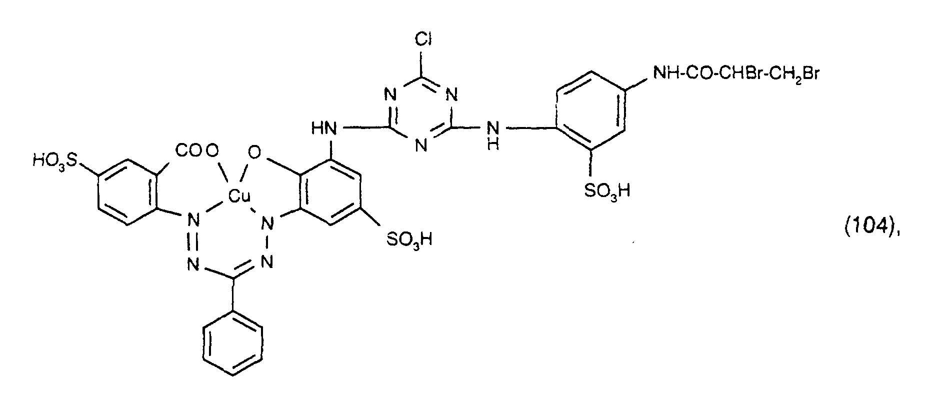 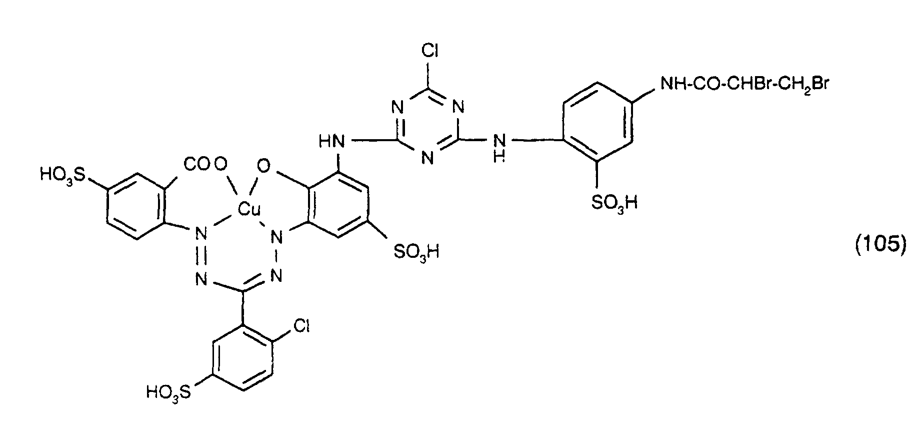 und 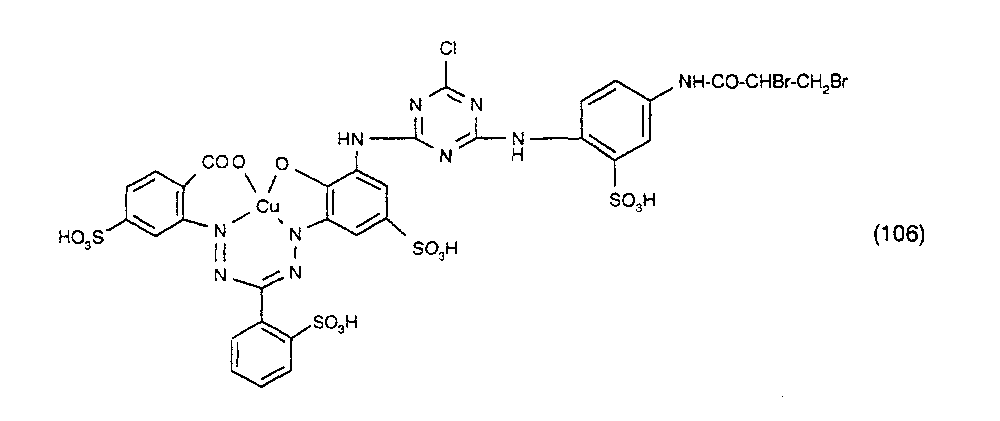 erhalten werden, die Baumwolle in blauen Farbtönen färben.

### Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 1 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Druckvorschrift

3 Teile des gemäss Beispiel 1 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 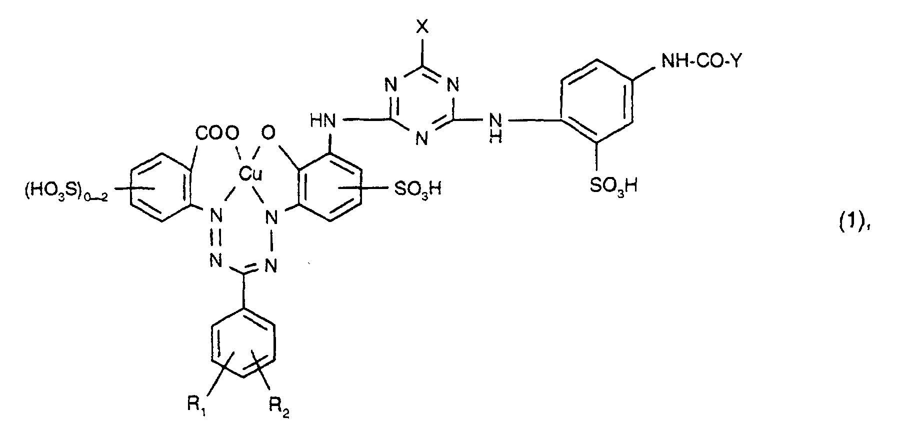 worin
R₁ und R₂ unabhängig voneinander Wasserstoff, Sulfo, C₁-C₄-Alkyl, C₁-C₄-Alkoxy oder Halogen sind,
X Fluor oder Chlor ist und
Y eine Gruppe -CHT-CH₂T oder -CT=CH₂ und T Brom oder Chlor bedeutet.

2. Reaktivfarbstoffe gemäss Anspruch 1, der Formel 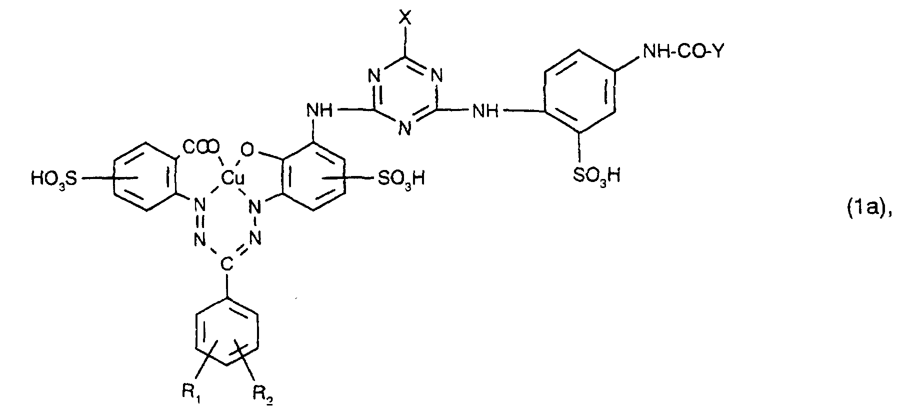 worin R₁, R₂, X und Y die in Anspruch 1 angegebenen Bedeutungen haben.

3. Reaktivfarbstoffe gemäss Anspruch 1, der Formel 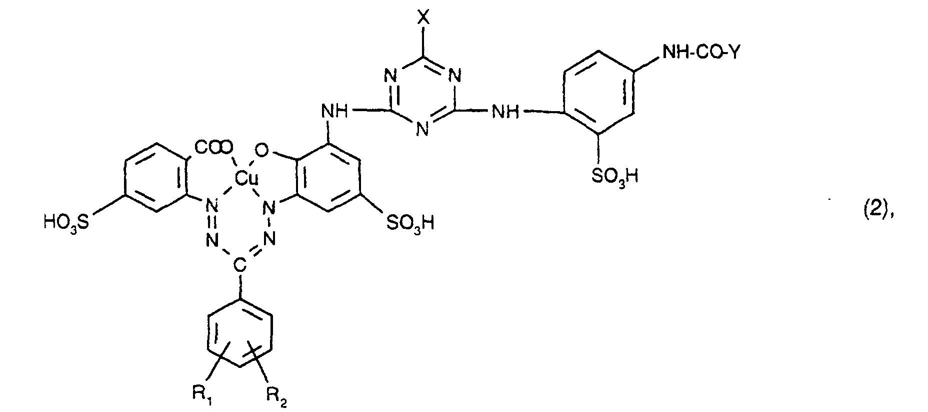 worin R₁, R₂, X und Y die in Anspruch 1 angegebenen Bedeutungen haben.

4. Reaktivfarbstoffe gemäss einem der Ansprüche 1 bis 3, **dadurch gekennzeichnet, dass** R₁ und R₂ Wasserstoff sind.

5. Reaktivfarbstoffe gemäss einem der Ansprüche 1 bis 4, **dadurch gekennzeichnet, dass** X Chlor ist.

6. Reaktivfarbstoffe gemäss einem der Ansprüche 1 bis 5, **dadurch gekennzeichnet, dass** Y eine Gruppe -CHT-CH₂T ist.

7. Reaktivfarbstoffe gemäss einem der Ansprüche 1 bis 6, **dadurch gekennzeichnet, dass** T Brom ist.

8. Reaktivfarbstoffe gemäss einem der Ansprüche 1 bis 7, **dadurch gekennzeichnet, dass** Y eine Gruppe -CHT-CH₂T und T Brom ist.

9. Reaktivfarbstoffe gemäss einem der Ansprüche 1 bis 3, **dadurch gekennzeichnet, dass**
R₁ und R₂ Wasserstoff sind,
X Chlor,
Y eine Gruppe -CHT-CH₂T und T Brom ist

10. Verfahren zur Herstellung von Reaktivfarbstoffen der Formel (1) gemäss Anspruch 1, **dadurch gekennzeichnet, dass** man eine Verbindung der Formel 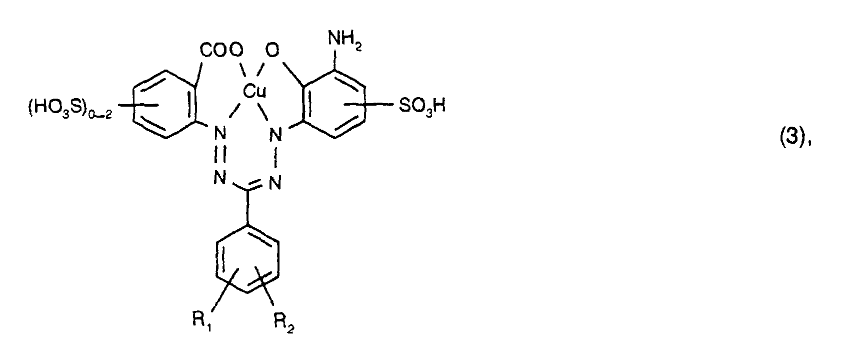 Cyanurchlorid oder Cyanurfluorid und ein Diamin der Formel 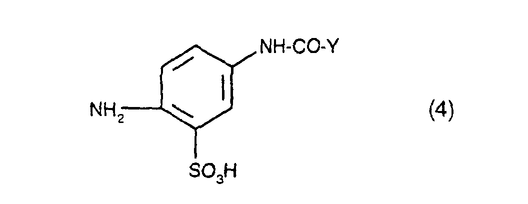 in beliebiger Reihenfolge miteinander umsetzt, wobei R₁, R₂, X und Y die in Anspruch 1 angegebenen Bedeutungen haben.

11. Verfahren zum Färben oder Bedrucken von hydroxylgruppenhaltigen oder stickstoffhaltigen Fasermaterialien, **dadurch gekennzeichnet, dass** man mindestens einen Reaktivfarbstoff der Formel (1) gemäss Anspruch 1 verwendet.

12. Verfahren gemäss Anspruch 11, **dadurch gekennzeichnet, dass** man cellulosehaltige Fasermaterialien, insbesondere baumwollhaltige Fasermaterialien, färbt oder bedruckt.

13. Konzentrierte, wässrige Formulierungen, **dadurch gekennzeichnet, dass** sie 5 bis 50 Gew.-% mindestens eines Reaktivfarbstoffs der Formel 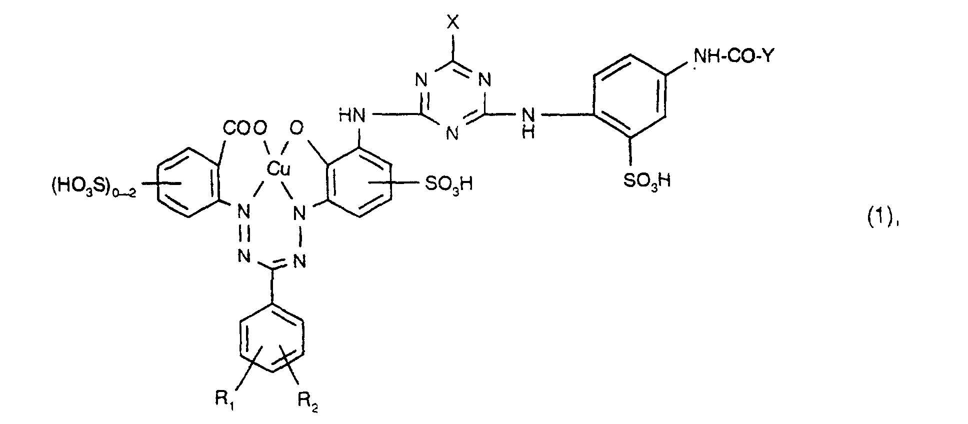 enthalten, worin
R₁ und R₂ unabhängig voneinander Wasserstoff, Sulfo, C₁-C₄-Alkyl, C₁-C₄-Alkoxy oder Halogen sind,
X Fluor oder Chlor ist und
Y eine Gruppe -CHT-CH₂T oder -CT=CH₂ und T Brom oder Chlor bedeutet.

## Claims

1. A reactive dye of formula 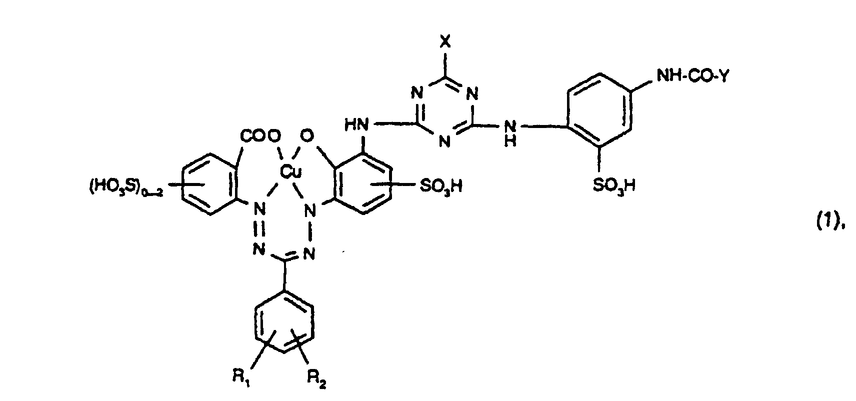 wherein
R₁ and R₂ are each independently of the other hydrogen, sulfo, C₁-C₄alkyl, C₁-C₄alkoxy or halogen,
X is fluoro or chloro, and
Y is a -CHT-CH₂T or -CT=CH₂ group, and T is bromo or chloro.

2. A reactive dye according to claim 1, of formula 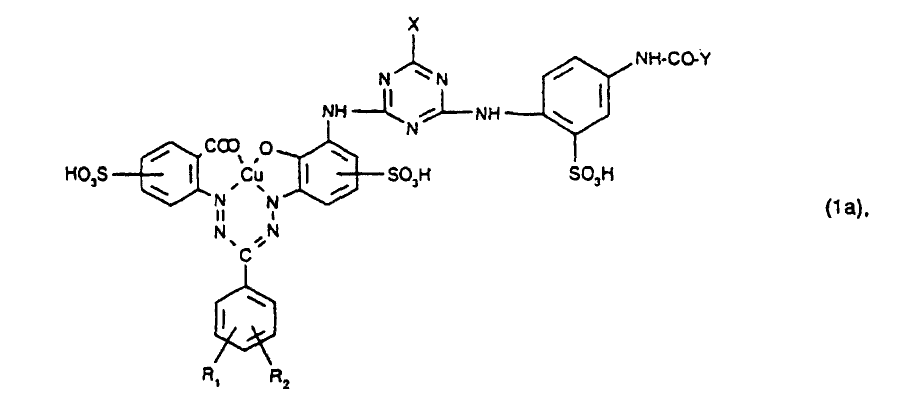 wherein R₁, R₂, X and Y have the meanings stated in claim 1.

3. A reactive dye according to claim 1, of formula 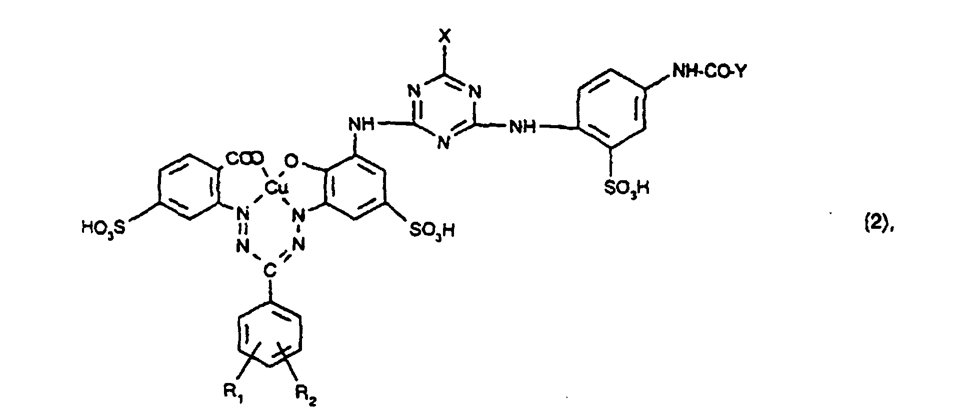 wherein R₁, R₂, X and Y have the meanings stated in claim 1.

4. A reactive dye according to any one claims 1 to 3, wherein R₁ and R₂ are hydrogen.

5. A reactive dye according to any one of claims 1 to 4, wherein X is chloro.

6. A reactive dye according to any one of claims 1 to 5, wherein Y is a -CHT-CH₂T group.

7. A reactive dye according to any one of claims 1 to 6, wherein T is bromo.

8. A reactive dye according to any one of claims 1 to 7, wherein Y is a -CHT-CH₂T group, and T is bromo.

9. A reactive dye according to any one of claims 1 to 3, wherein
R₁ and R₂ are hydrogen,
X is chloro,
Y is a -CHT-CH₂T group, and T is bromo.

10. A process for the preparation of a reactive dye of formula (1) according to claim 1, which comprises reacting a compound of formula 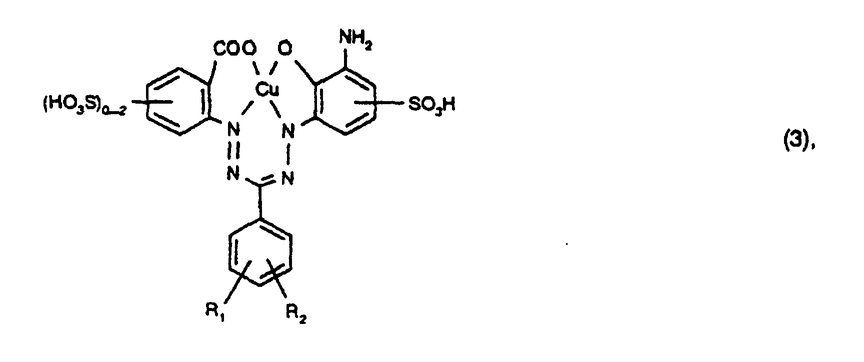 cyanuric chloride or cyanuric fluoride and a diamine of formula 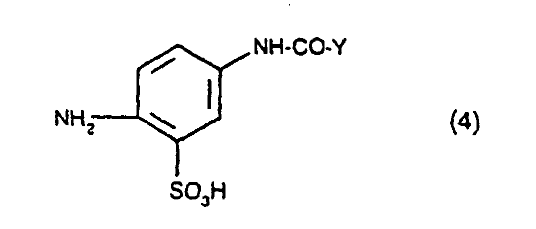 in any order with one another, R₁, R₂, X and Y having the meanings stated in claim 1.

11. A process for dyeing or printing hydroxyl-containing or nitrogen-containing fibre materials, which comprises using at least one reactive dye of formula (1) according to claim 1.

12. A process according to claim 11, which comprises dyeing or printing cellulosic fibre materials, in particular cotton-containing fibre materials.

13. A concentrated aqueous formulation, which comprises 5 to 50% by weight of at least one reactive dye of formula 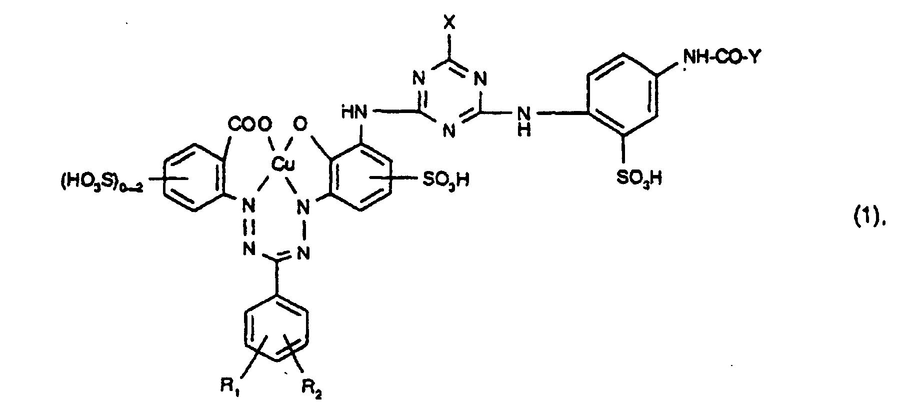 wherein
R₁ and R₂ are each independently of the other hydrogen, sulfo, C₁-C₄ alkyl, C₁-C₄ alkoxy or halogen,
X is fluoro or chloro, and
Y is a -CHT-CH₂T or -CT=CH₂ group, and T is bromo or chloro.

## Revendications

1. Colorants réactifs de formule 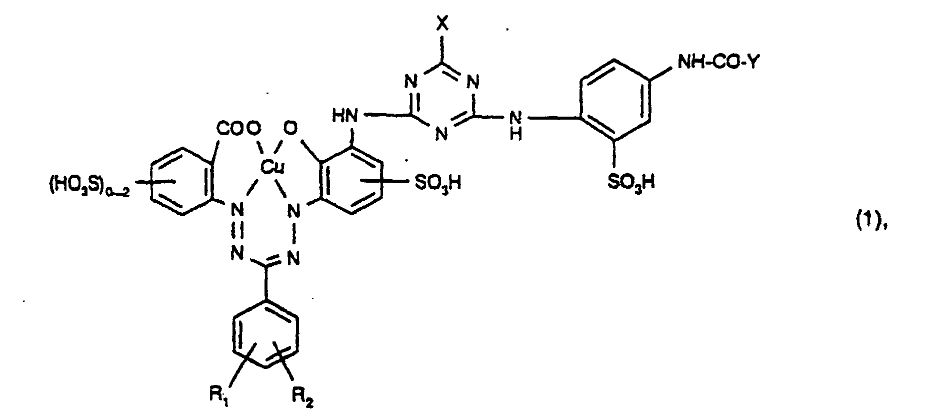 dans laquelle
R₁ et R₂ représentent indépendamment l'un de l'autre un atome d'hydrogène, un groupe sulfo, alkyle en C₁ à C₄, alcoxy en C₁ à C₄ ou un atome d'halogène,
X est un atome de fluor ou de chlore et
T représente un groupe -CHT-CH₂T ou -CT=CH₂ et T un atome de brome ou de chlore.

2. Colorants réactifs selon la revendication 1, de formule 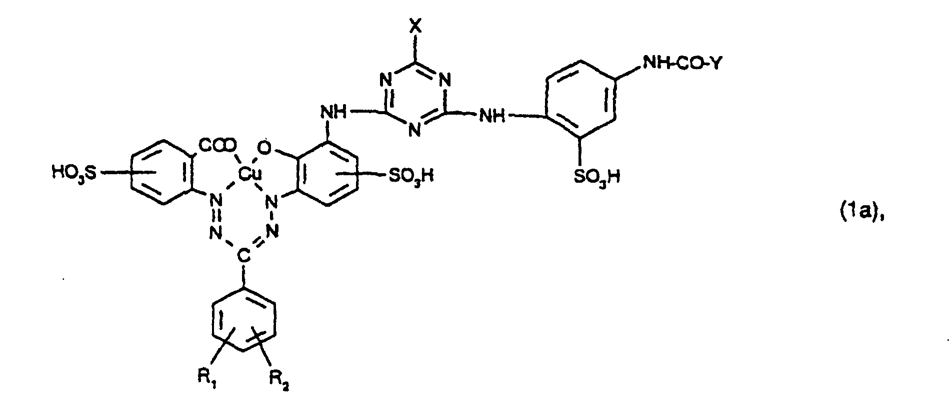 dans laquelle R₁, R₂, X et Y ont les significations indiquées à la revendication 1.

3. Colorants réactifs selon la revendication 1, de formule 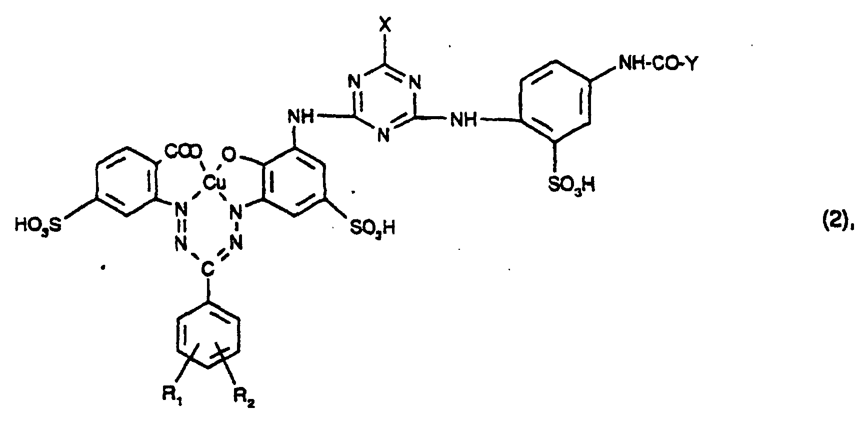 dans laquelle R₁, R₂, X et Y ont les significations indiquées à la revendication 1.

4. Colorants réactifs selon l'une des revendications 1 à 3, **caractérisés en ce que** R₁ et R₂ sont un atome d'hydrogène.

5. Colorants réactifs selon l'une des revendications 1 à 4, **caractérisés en ce que** X est un atome de chlore.

6. Colorants réactifs selon l'une des revendications 1 à 5, **caractérisés en ce que** Y est un groupe -CHT=CH₂T.

7. Colorants réactifs selon l'une des revendications 1 à 6, **caractérisés en ce que** T est le brome.

8. Colorants réactifs selon l'une des revendications 1 à 7, **caractérisés en ce que** Y est un groupe -CHT=CH₂T et T est le brome.

9. Colorants réactifs selon l'une des revendications 1 à 3, **caractérisés en ce que**
R₁ et R₂ sont un atome d'hydrogène,
X est un atome de chlore,
Y est un groupe -CHT=CH₂T et T est le brome.

10. Procédé pour la préparation de colorants réactifs de formule (1) selon la revendication 1, **caractérisé en ce qu'**on met à réagir l'un avec l'autre un composé de formule 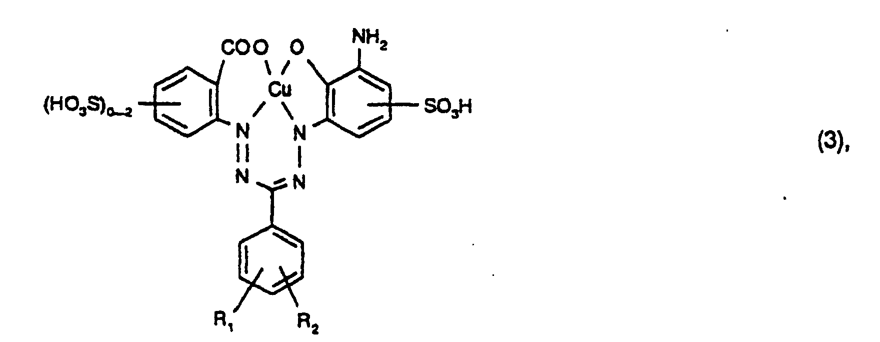 un chlorure de cyanuryle ou un fluorure de cyanuryle et une diamine de formule 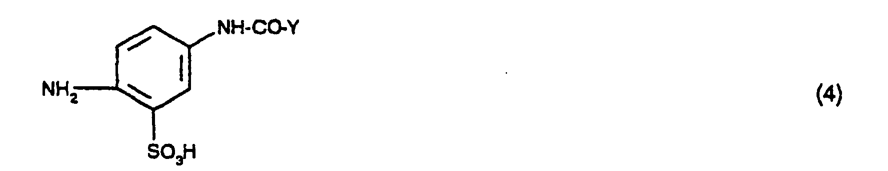 dans un ordre d'introduction quelconque, dans lequel R₁, R₂, X et Y ont les significations indiquées à la revendication 1.

11. Procédé pour la teinture ou l'impression de matériaux fibreux contenant des groupes hydroxyle ou azotés, **caractérisé en ce qu'**on utilise au moins un colorant réactif de formule (1) selon la revendication 1.

12. Procédé selon la revendication 11, **caractérisé en ce qu'**on effectue la teinture ou l'impression de matériaux fibreux cellulosiques, en particulier de matériaux fibreux contenant du coton.

13. Formulations aqueuses concentrées, **caractérisées en ce qu'**elles contiennent de 5 à 50% en poids d'au moins un colorant réactif de formule 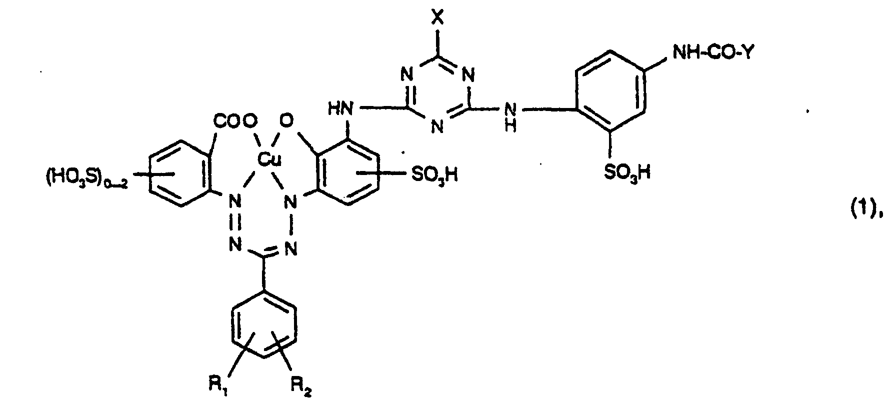 dans laquelle
R₁ et R₂ représentent indépendamment l'un de l'autre un atome d'hydrogène, un groupe sulfo, alkyle en C₁ à C₄, alcoxy en C₁ à C₄ ou un atome d'halogène,
X est un atome de fluor ou de chlore et
Y représente un groupe -CHT-CH₂T ou -CT=CH₂ et T un atome de brome ou de chlore.
